# EUROPEAN PATENT SPECIFICATION

(11) **EP 1 313 992 B1**
(45) Date of publication and mention of the grant of the patent: **26.10.2005**
(21) Application number: 01960805.8
(22) Date of filing: 17.08.2001
(51) Int. Cl.: F26B 21/02, F26B 21/04, F26B 21/08, F26B 21/00, F26B 23/02

(54) **METHOD AND APPARATUS FOR UTILIZATION OF WASTE HEAT IN DESICCATION AND HEAT TREATMENT OF WOOD**
VERFAHREN UND VORRICHTUNG ZUR VERWENDUNG VON ABWÄRME IN TROCKNUNG UND WÄRMEBEHANDLUNG VON HOLZ
PROCEDE ET APPAREIL DESTINE A L'UTILISATION DE LA CHALEUR REJETEE DANS LE SECHAGE ET DANS LE TRAITEMENT THERMIQUE DU BOIS

(30) Priority: 24.08.2000 FI 20000327 U
(43) Date of publication of application: 28.05.2003
(73) Proprietor: Tekmaheat Oy, 15101 Lahti (FI)
(72) Inventor: HAUKKA, Pauli, Matias, FIN-33250 Tampere (FI); WALLEN, Vesa, Viktor, FIN-37560 Lempäälä (FI); SONNINEN, Heikki, FIN-15240 Lahti (FI)
(74) Representative: Järveläinen, Pertti Tauno Juhani
(86) International application number: PCT/FI2001/000729
(87) International publication number: WO 2002/016848

(56) References cited:
- DE-A1- 10 011 177
- GB-A- 2 263 968
- US-A- 3 675 600
- US-A- 4 233 914
- US-A- 5 237 757
- DATABASE WPI Week 9435, Derwent Publications Ltd., London, GB; AN 1994-283914, XP002962055 & JP 6 213 568 A (ISHII Y) 02 August 1994

## Description

The present invention relates to a method as defined in the preambles of claims 1 and 2 for utilization of waste heat in drying and heat treatment of timber. The invention also relates to an apparatus for utilization of waste heat in drying and heat treatment of timber.

A saw mill produces a significant amount of humid fuel (bark, chips and sawdust), which is utilized in a chips-fuelled boiler at the saw mill for the production of heat needed in the drying plant. The final temperature of the fuel gases exhausted via the chimney is typically 150°C, which means that the evaporation heat adsorbed in the water is lost with the fuel gases flowing out into the environment.

In the present invention, the free energy contained in humid combustion gases can be utilized in preliminary heating, drying and heat treatment of timber, so the treatment of the wood material can be carried out at lower running costs. Fl patent specification 106578 presents a system for the drying of fresh wood wherein waste wood is burned in a combustion gas generator to produce hot combustion gas and smoke, whereupon the hot combustion gas is fed into a wood drying chamber via a combustion gas feed channel.

It has been established that microcracking occurring at the beginning of the drying of sawn timber is the greatest factor causing cracking of sawn timber. To prevent cracking, some drying plants use a system of feeding steam into the circulation air to saturate the air, thus preventing the timber from getting dried during the initial warming-up stage. Typically, of the extent of cracking prevailing in the final situation in a compartment kiln, about one half could be avoided if the preliminary warming-up could be implemented without the timber getting dried at this stage. However, steam generated by the traditional method with primary energy is expensive to use for drying.

Via heat treatment performed after the drying of the timber, it is possible to modify the properties of the timber, e.g. moisture-induced deformations and decay resistance. In the heat treatment, the temperature of the timber is typically increased to a level of about 200°C. The structure of the wood undergoes changes when water and various extractives are further removed from it. Externally, the changes occurring in the wood become visible as a change of color into different shades of brown and as a reduction of the weight of the wood.

Heat treatment involves a serious risk of fire. To prevent inflammation, steam is supplied into the heat treatment chamber during the treatment to make it inert.

In the present invention, as defined in independent method claims 1 and 2 and in independent apparatus claim 6, it is possible to utilize the completely mixed humid combustion gases having a low oxygen content produced in the combustion of e.g. moist wood chips and passed via a scrubber or equivalent and, depending on the phase of the wood preparation process, subsequently into a space where the preliminary warming-up, drying or heat treatment of timber is performed.

In the drying of timber, the timber is first warmed up with saturated combustion gas obtained from a scrubber to the temperature of the dewpoint of the combustion gas, after which, by reducing the relative humidity and increasing the temperature of the combustion gas, the drying of the timber can be accomplished in a controlled manner.

The heat treatment can be implemented by using completely mixed, humid combustion gas having a low oxygen content passed via a scrubber, by heating the gas indirectly. This is a reliable way to ensure that no high-oxygen areas involving a risk of fire will appear in the heat treatment space.

In a corresponding manner it is possible to utilize e.g. the vapors produced in heat treatment, by passing them via a strainer back into the heat treatment process.

By applying the invention, the waste heat produced in the combustion of wood waste or in heat treatment can be effectively utilized in the drying of timber. In addition, as compared with traditional methods, the system of the invention is environmentally friendly because it reduces the amount of impurities, e.g. volatile organic compounds (VOC) emitted into the environment from the timber treatment process.

The invention can also be used to increase the desiccation capacity of an existing plant without a costly boiler investment, which would otherwise be needed for the generation of drying steam.

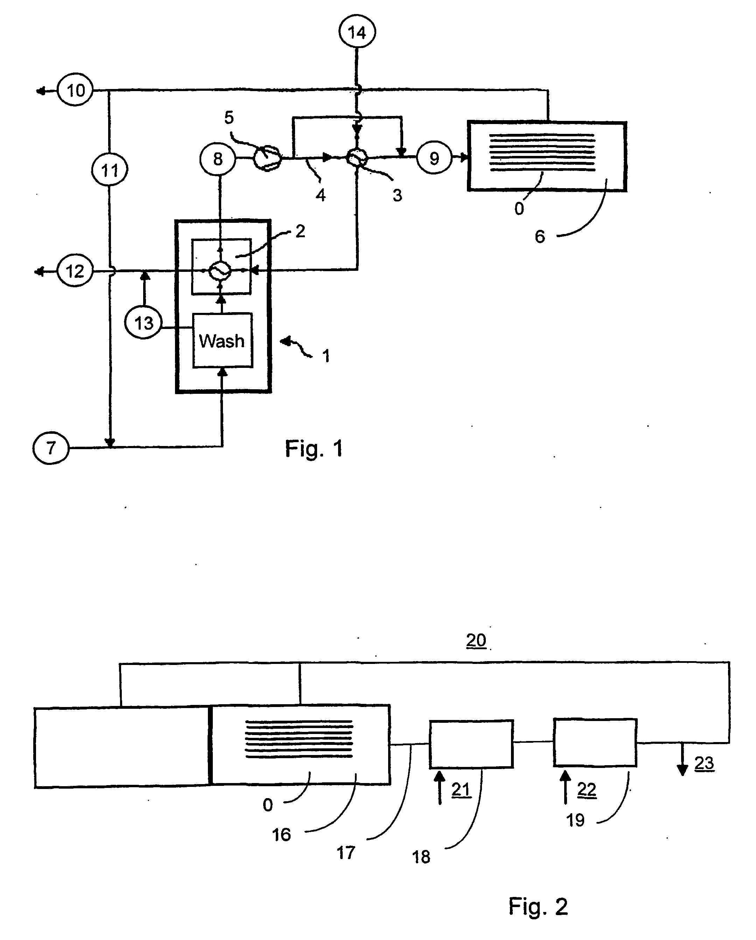

In the following, the invention will be described in detail by the aid of examples with reference to the attached drawing, wherein
- Fig. 1: presents an apparatus according to the invention, and
- Fig. 2: presents another apparatus according to the invention.

### Example 1

Combustion gases 7, typically at a temperature of about 150°C, coming from a boiler fuelled with wood chips are passed into a scrubber 1. In the scrubber, the solids contained in the combustion gases are separated and the water vapor content of the combustion gases is increased.

The combustion gas coming from the scrubber is saturated; its temperature is about 70°C, depending on the temperature of the gas being scrubbed, humidity of the fuel being used, hydrogen content of the fuel, auxiliary humidification and humidity of the combustion air. The condensate and sediment produced in the scrubber during combustion of wood chips are alkaline, which is why no separate treatment for neutralizing the condensate is needed.

### I. Preliminary warming-up of timber:

The combustion gases scrubbed during preliminary warming-up are not preheated, but the gases are passed via route 8-9 into a timber (timber stack 0) treatment space 6 (chamber or the like), hereinafter referred to as process kiln. Since the surface temperature of the timber at the preliminary warming-up stage is lower than the dewpoint temperature of the scrubbed combustion gases, water is condensed on the surface of the timber, preventing drying and cracking of the surfaces during preliminary warming-up. Some of the condensed water is absorbed into the wood, increasing the moistness of the wood, while most of the water flows down into floor drains. As a result of condensation, heat is effectively transferred from the gas into the wood, so a high rate of increase of wood temperature can be achieved, thus allowing the drying phase to be started sooner. The combustion gases leaving the process kiln 6 are in a saturated condition (at a reduced temperature), so that, by passing the combustion gases 10 from the apparatus into a heat recovery unit, it will be possible to utilize a proportion of the heat to preheat and humidify the combustion air. The condensation temperature of the combustion gases can be raised by heating with electricity 14 and using humidification 2.

### II. Drying of timber:

The drying energy needed at the drying stage is supplied using a separate heat exchanger (not shown) provided in the kiln 6, and the water evaporating from the wood is enough to maintain sufficiently humid conditions. Steam is only needed at the final phase of the process when internal moisture variations within the timber are to be equalized by increasing humidity in the kiln 6.

The steam needed is obtained by scrubbing some or all of the combustion gases from the boiler and passing them via the heat exchanger 3 into the process kiln 6.

### III. Heat treatment of timber:

At the heat treatment stage, a proportion of the combustion gases from the chips-fuelled boiler is scrubbed and passed via the heat exchanger 3 into the process kiln 6. By means of a hot current 14, the temperature of the combustion gases supplied into the process kiln 6 is raised to the desired timber treatment temperature. To achieve a better control of the temperature, some of the combustion gases may bypass the heat exchanger 3 and the bypass current is mixed with the heated combustion gases before reaching the process kiln 6. The combustion gases leaving the process kiln 6 during the heat treatment are at a high temperature and contain organic compounds released from the wood, which is why the combustion gases are passed back to the scrubber 1 via route 11. An amount of combustion gas corresponding to the amount returned is removed from the system into the heat recovery stage via route 13-12. The heat treatment of timber does not require any large energy currents as heat losses can be prevented by properly insulating the process kiln 6 and the combustion gas ducts 4.

The steam can also be superheated using a battery (not shown) provided in the kiln 6.

In the above-described system, it is also possible to use other fuels instead of wood chips. If the combustion gases supplied into the scrubbing stage are dry and at a low temperature, then it is necessary to use additional humidification because otherwise the final temperature in the scrubber will remain low. A need for additional humidification leads to an increasing power consumption, and the additional power is obtained from the hot current 14. This current 14 is received either from a separate auxiliary boiler or it can be obtained as a shunt current of combustion gases from the chips-fuelled boiler.

### Example 2

In the heat treatment, steam 17 generated in the process kiln 16 and scrubbed can also be fed back into the process kiln 16. The steam coming from the process kiln during heat treatment is typically at a temperature in the range of 180...230°C. The steam is superheated and the partial pressure of water vapor is low. In addition, it contains combustible tars and other VOC's. Before being fed back into the heat treatment process, it has to be oxygenated and scrubbed/humidified. The oxygenation and scrubbing/humidification are performed outside the chamber in separate devices 18, 19. After oxygenation (calcination), the temperature may be 400...800°C, which is decreased by spraying water into the gas, causing the water to evaporate. By adjusting the amount of water, it is possible to adjust the temperature. In preliminary warming-up and drying, it is possible to utilize steam having a temperature of the order of 80...120°C, in heat treatment the steam may be at a temperature of 100...230°C, depending on the phase of the process. The process kiln 6 comprises piping 20 for feedback. Energy is supplied to device 18 via pipes 21, and water is supplied to the scrubbing/humidifying device 19 via pipes 22. In addition, the piping 20 is provided with an exit flow channel 23 placed after the scrubbing/humidifying device 19. The heat can be recovered from the exit current by means of a heat exchanger (not shown).

It is obvious to the person skilled in the art that different embodiments of the invention are not limited to the example described above.

## Claims

1. Method for utilization of waste heat in drying and/or heat treatment of timber, in which drying/heat treatment the timber (0) is treated in a treatment space (6), such as a drying chamber, and
in which method steam/combustion gas (7) generated in the combustion of a fuel used for heating is supplied into the treatment space (6),
**characterized in that**,
in said method at least a proportion of the steam/combustion gas (7) is scrubbed/humidified in a scrubbing/humidifying device, such as a scrubber (2), before being passed into the treatment space (6).

2. Method for utilization of waste heat in heat treatment of timber, in which heat treatment the timber (0) is treated in a treatment space (16), such as a drying chamber, wherein steam/gas (17) generated in the treatment space (16) during the heat treatment is circulated back into the treatment space (16), **characterized in that**
in said method at least a proportion of the steam/gas (17) is scrubbed/humidified before being circulated into the treatment space (16), and
that, before the scrubbing/humidification, the steam/gas (17) is oxygenated.

3. Method as defined in claim 1 or 2, **characterized in that** the scrubbing/humidification is performed by adding liquid, and that the temperature of the steam/(combustion) gas (7, 17) is controlled by controlling the amount of liquid.

4. Method as defined in claim 1, **characterized in that**, in the drying process, the timber (0) is first heated by saturated steam/combustion gas obtained from a scrubber or equivalent substantially to the temperature of the dewpoint of the steam/combustion gas, whereupon the relative humidity is reduced and the temperature of the steam/combustion gas is raised.

5. Method as defined in claim 1, **characterized in that** the low-oxygen, mixed, humid steam/combustion gas is heated.

6. Apparatus for utilization of waste heat in drying and/or heat treatment of timber, in which drying/heat treatment the timber (0) is treated in a treatment space (6, 16), and which comprises elements (9, 20) for conveying steam/combustion gas (7, 17) generated in the treatment space (6, 16) and/or steam/combustion gas (7, 17) generated in the combustion of a fuel used for heating into the treatment space (6, 16),
**characterized in that**
the apparatus comprises a device, such as a scrubber (2), by means of which at least a proportion of the steam/combustion gas is scrubbed/humidified before being passed back into the treatment space (6, 16).

7. Apparatus as defined in claim 6, **characterized in that** it comprises a calcination apparatus (18) by means of which the steam/combustion gas is oxygenated before being scrubbed/humidified.

8. Apparatus as defined in claim 6, **characterized in that** it comprises a heating apparatus by means of which the low-oxygen, mixed, humid steam/combustion gas is heated.

9. Apparatus as defined in claim 8, **characterized in that** the heating apparatus is a heat exchanger (3), the heating being effected in an indirect manner.

10. Apparatus as defined in claim 6, **characterized in that** it comprises bypass elements via which the exhaust gases from the warming-up stage of the timber treatment process and from the low-temperature desiccation stage are caused to bypass the heating circulation.

11. Apparatus as defined in claim 8, **characterized in that** it comprises elements whereby the gases from high-temperature drying and heat treatment of the timber are caused to return to the scrubber (1) or equivalent and to exit from the apparatus after the scrubbing, preferably before the vaporizing system of the scrubber (1).

## Patentansprüche

1. Verfahren zur Nutzung von Abwärme bei der Trocknung und / oder Wärmebehandlung von Holz, bei welcher Trocknung / Wärmebehandlung das Holz (0) in einem Behandlungsraum (6) wie beispielsweise einer Trocknungskammer behandelt wird, und
bei welchem Verfahren ein bei der Verbrennung eines zur Beheizung verwendeten Brennstoffs erzeugter Dampf / erzeugtes Verbrennungsgas (7) in den Behandlungsraum (6) zugeführt wird,
**dadurch gekennzeichnet,**
**dass** in dem Verfahren zumindest ein Anteil des Dampfes / Verbrennungsgases (7) in einer Wasch-/Befeuchtungseinrichtung gewaschen / befeuchtet wird, wie beispielsweise in einem Wäscher (2), bevor es in den Behandlungsraum (6) geführt wird.

2. Verfahren zur Nutzung von Abwärme bei der Wärmebehandlung von Holz, bei welcher Wärmebehandlung das Holz (0) in einem Behandlungsraum (16) wie beispielsweise einer Trocknungskammer behandelt wird, wobei in dem Behandlungsraum (16) während der Wärmebehandlung erzeugter Dampf / erzeugtes Gas (17) in den Behandlungsraum (16) zurückzirkuliert wird,
**dadurch gekennzeichnet,**
**dass** in dem Verfahren zumindest ein Anteil des Dampfes / Gases (17) gewaschen / befeuchtet wird, bevor es in den Behandlungsraum (16) zirkuliert wird, und
**dass** vor dem Waschen / dem Befeuchten der Dampf / das Gas (17) mit Sauerstoff behandelt wird.

3. Verfahren nach Anspruch 1 oder 2,
**dadurch gekennzeichnet,**
**dass** das Waschen / das Befeuchten durch den Zusatz von Flüssigkeit vorgenommen wird, und
**dass** die Temperatur des Dampfes / des (Verbrennungs-) Gases (7, 17) durch das Steuern der Menge an Flüssigkeit gesteuert wird.

4. Verfahren nach Anspruch 1,
**dadurch gekennzeichnet,**
**dass** bei dem Trocknungsvorgang das Holz (0) als erstes durch gesättigten Dampf / Verbrennungsgas erhitzt wird, das von einem Wäscher oder einem Äquivalent im Wesentlichen bei der Temperatur des Taupunktes des Dampfes / Verbrennungsgases erhalten wird, woraufhin die relative Feuchligkeit reduziert wird und die Temperatur des Dampfes / Verbrennungsgases angehoben wird.

5. Verfahren nach Anspruch 1,
**dadurch gekennzeichnet,**
**dass** der wenig Sauerstoff enthaltende, gemischte, feuchte Dampf / das Verbrennungsgas erhitzt wird.

6. Vorrichtung zur Nutzung von Abwärme beim Trocknen und / oder Wärmebehandeln von Holz, bei welcher Trocknung / Wärmebehandlung das Holz (0) in einem Behandlungsraum (6, 16) behandelt wird, und welche Elemente (9, 20) zum Fördern von in dem Behandlungsraum (6, 16) erzeugtem Dampf / Verbrennungsgas (7, 17) und / oder bei der Verbrennung eines zum Heizen in dem Behandlungsraum (6, 16) verwendeten Brennstoffes erzeugtem Dampf / Verbrennungsgas (7, 17) aufweist,
**dadurch gekennzeichnet,**
**dass** die Vorrichtung eine Einrichtung wie beispielsweise einen Wäscher (2) aufweist, mittels dessen zumindest ein Anteil des Dampfes / Verbrennungsgases gewaschen / befeuchtet wird, bevor es zurück in den Behandlungsraum (6, 16) geführt wird.

7. Vorrichtung nach Anspruch 6.
**dadurch gekennzeichnet,**
**dass** sie eine Vorrichtung (18) zum Austreiben von flüchtigen Substanzen durch Erhitzen (calcination apparatus) aufweist, mittels der der Dampf / das Verbrennungsgas mit Sauerstoff behandelt wird, bevor es gewaschen / befeuchtet wird.

8. Vorrichtung nach Anspruch 6,
**dadurch gekennzeichnet,**
**dass** sie eine Heizvorrichtung aufweist, mittels der der wenig Sauerstoff enthaltende, gemischte, feuchte Dampf / das Verbrennungsgas erhitzt wird.

9. Vorrichtung nach Anspruch 8,
**dadurch gekennzeichnet,**
**dass** die Heizeinrichtung ein Wärmetauscher (3) ist, wobei die Erwärmung in indirekter Weise erfolgt.

10. Vorrichtung nach Anspruch 6,
**dadurch gekennzeichnet,**
**dass** sie Bypasselemente aufweist, über die die Abgase aus der Aufwärmstufe des Holzbehandlungsvorganges und aus der bei niedriger Temperatur durchgeführten Austrocknungsstufe zur Umgehung der Wärmezirkulation veranlasst werden.

11. Vorrichtung nach Anspruch 8,
**dadurch gekennzeichnet,**
**dass** sie Elemente aufweist, durch die die Gase aus der bei hoher Temperatur laufenden Trocknung und Wärmebehandlung des Holzes veranlasst werden, zu dem Wäscher (1) oder einem Äquivalenten zurückzukehren und aus der Vorrichtung nach dem Waschen auszutreten, vorzugsweise vor einem Verdampfungssystem des Wäschers (1).

## Revendications

1. Procédé destiné à l'utilisation de la chaleur rejetée dans le séchage et/ou le traitement thermique du bois, dans lequel le séchage/traitement thermique du bois (0) est traité dans un espace de traitement (6) telle qu'une chambre de séchage, et
dans ledit procédé, la vapeur/ gaz de combustion (7) générée dans la combustion d'un carburant utilisé pour chauffer est fournie à l'intérieur de l'espace de traitement (6), **caractérisé en ce que**
dans ledit procédé, au moins une proportion de la vapeur/ gaz de combustion (7) est purifiée/humidifiée dans un dispositif d'épuration/humidification, tel qu'un épurateur (2) avant d'être transmise à l'intérieur de l'espace de traitement (6).

2. Procédé destiné à l'utilisation de la chaleur rejetée dans le traitement thermique du bois, dans lequel le traitement thermique du bois (0) est traité dans un espace de traitement (16), telle qu'une chambre de séchage, où la vapeur/gaz (17) générée dans l'espace de traitement (16) pendant le traitement thermique est diffusée en retour à l'intérieur de l'espace de traitement (16), **caractérisé en ce que**
dans ledit procédé, au moins une proportion de la vapeur/gaz (17) est purifiée/humidifiée avant d'être diffusée à l'intérieur de l'espace de traitement (16), et
**en ce que**, avant l'épuration/ humidification, la vapeur/ gaz (17) est oxygénée.

3. Procédé selon la revendication 1 ou 2, **caractérisé en ce que** l'épuration/humidification est effectuée en ajoutant un liquide, et **en ce que** la température de la vapeur/ gaz (de combustion) (7, 17) est contrôlée en contrôlant la quantité de liquide.

4. Procédé selon la revendication 1, **caractérisé en ce que** dans le processus de séchage, le bois (0) est d'abord chauffé par de la vapeur/ gaz de combustion saturée, obtenue à partir d'un épurateur ou similaire, essentiellement à la température du point de condensation de la vapeur/ gaz de combustion, après quoi l'humidité relative est réduite et la température de la vapeur/ gaz de combustion est augmentée.

5. Procédé selon la revendication 1, **caractérisé en ce que** la vapeur/ gaz de combustion humide, mélangée, à faible consistance en oxygène est chauffée.

6. Appareil destiné à l'utilisation de la chaleur rejetée dans le séchage et/ou le traitement thermique du bois, dans lequel le séchage/ traitement thermique du bois (0) est traité dans un espace de traitement (6, 16), qui comprend des éléments (9, 20) pour acheminer la vapeur/ gaz de combustion (7, 17) générée dans l'espace de traitement (6, 16) et/ ou la vapeur/ gaz de combustion (7, 17) générée dans la combustion d'un carburant utilisé pour chauffer l'intérieur de l'espace de traitement (6, 16),
**caractérisé en ce que**
l'appareil comprend un dispositif, tel qu'un épurateur (2), au moyen duquel au moins une proportion de la vapeur/ gaz de combustion est purifiée/humidifiée avant d'être retransmise à l'intérieur de l'espace de traitement (6, 16).

7. Appareil selon la revendication 6, **caractérisé en ce qu'**il comprend un dispositif de calcination (18) au moyen duquel la vapeur/ gaz de combustion est oxygénée avant d'être épurée/ humidifiée.

8. Appareil selon la revendication 6, **caractérisé en ce qu'**il comprend un dispositif de chauffage au moyen duquel la vapeur/ gaz de combustion humide, mélangée, à faible consistance en oxygène est chauffée.

9. Appareil selon la revendication 8, **caractérisé en ce que** le dispositif de chauffage est un échangeur de chaleur (3), la chaleur étant produite de manière indirecte.

10. Appareil selon la revendication 6, **caractérisé en ce qu'**il comprend des éléments de dérivation par l'intermédiaire desquels les gaz d'échappement provenant de l'étape de réchauffement du processus de traitement du bois et de l'étape de dessiccation à faible température sont entraînés de façon à contourner la circulation de la chaleur.

11. Appareil selon la revendication 8, **caractérisé en ce qu'**il comprend des éléments à l'aide desquels les gaz produits par le séchage et le traitement thermique à haute température du bois sont entraînés de façon à retourner à l'épurateur (1) ou similaire et à sortir de l'appareil après l'épuration, de préférence avant le système de vaporisation de l'épurateur (1).
